# DEMANDE DE BREVET EUROPEEN

(11) **EP 1 796 437 A2**
(43) Date de publication de la demande: **13.06.2007**
(21) Numéro de dépôt: 06354041.3
(22) Date de dépôt: 04.12.2006
(51) Int. Cl.: H05B 37/04

(54) **Dispositif d'eclairage de secours et appareil electrique de coupure le comportant**

(30) Priorité: 09.12.2005 FR 0512507
(71) Demandeur: SCHNEIDER ELECTRIC INDUSTRIES SAS, 92500 Rueil-Malmaison (FR)
(72) Inventeur: Colin, Jean-Marc, Schneider Electric Ind. SAS, 38050 Grenoble Cedex 09 (FR); Cartoux, Bernard, Schneider Electric Ind. SAS, 38050 Grenoble Cedex 09 (FR)
(74) Mandataire: Tripodi, Paul

(57) **Abrégé**

La présente invention concerne un dispositif d'éclairage de secours comprenant une lampe (13) mise en service lorsque le secteur est absent pour apporter un éclairage minimal. Ce dispositif est caractérisé en ce qu'il est associé à un appareil de coupure électrique (5) et comporte des moyens de détection de la tension (6) aux bornes de l'appareil de coupure (5), des moyens de détection du courant (7) circulant dans ledit appareil (5), des moyens de commande (11),dits premiers, reliés électriquement à la sortie des moyens de détection de la tension (6) et aux moyens de détection du courant précités (7) et commandant l'extinction de la lampe (13) lors de la détection soit d'une tension soit d'un courant aux bornes de l'appareil de coupure (5) et commandant l'allumage de la lampe (13) dans le cas où aucun courant et aucune tension ne sont détectés.

## Description

La présente invention concerne un dispositif d'éclairage de secours comprenant une lampe mise en service lorsque le secteur est absent pour apporter un éclairage minimal ainsi qu'un appareil de coupure équipé d'une telle lampe.
On connaît une lampe de secours composée d'un socle destiné à être fixé dans le mur et d'une lampe de secours pouvant être extraite pour une utilisation en lampe de poche. Cette lampe assure la fonction éclairage de secours, lorsque le secteur n'est pas en service. On connaît également une prise assurant à la fois la fonction veilleuse et comportant une lampe de secours.
La fonction veilleuse permet de se déplacer en pleine nuit sans avoir à allumer l'éclairage normal. La fonction éclairage de secours sert à apporter un minimum d'éclairage pour se déplacer dans la pièce et poursuivre une activité domestique minimale. Cela permet d'avoir en permanence une lampe chargée disponible afin d'assurer un déplacement en cas de coupure du courant.
Or, dans ces réalisations, il est nécessaire d'utiliser les deux phases électriques.
La présente invention résout ce problème et propose un dispositif d'éclairage de secours ainsi qu'un appareil de coupure le comportant, de conception simple et permettant de n'utiliser qu'une seule phase.
A cet effet, la présente invention a pour objet un dispositif d'éclairage de secours du genre précédemment mentionné, ce dispositif étant caractérisé en ce qu'il est associé à un appareil de coupure électrique et comporte des moyens de détection de la tension aux bornes de l'appareil de coupure, des moyens de détection du courant circulant dans ledit appareil, des moyens de commande dits premiers reliés électriquement à la sortie des moyens de détection de la tension et à la sortie des moyens de détection du courant précités et commandant l'extinction de la lampe lors de la détection soit d'une tension soit d'un courant aux bornes de l'appareil de coupure et commandant l'allumage de la lampe dans le cas où aucun courant et aucune tension ne sont détectés.

Selon une réalisation particulière, ce dispositif comporte une partie fixe et une partie extractible, ladite partie fixe comportant les moyens de détection du courant précités, les moyens de détection de la tension précités, les premiers moyens de commande précités et la partie extractible comporte la lampe précitée, une batterie et des moyens de commande dits seconds de la lampe en position extraite de la partie extractible.

Selon une caractéristique particulière, ce dispositif comporte des moyens de charge de la batterie, ladite batterie permettant l'allumage de la lampe en l'absence du secteur.

Selon une autre caractéristique, ce dispositif comporte un voyant électrique destiné à indiquer la présence d'une tension aux bornes de l'appareil de coupure électrique.

Selon une autre caractéristique particulière, les premiers moyens de commande comportent un transistor, dit premier, dont la base est reliée à la sortie des moyens de détection de la tension et à la sortie des moyens de détection du courant, dont l'émetteur est relié électriquement à la ligne de référence du circuit et dont le collecteur est relié électriquement aux moyens de commande dits seconds précités.

Selon une autre caractéristique, les seconds moyens de commande comportent un second transistor dont la base est reliée électriquement au premier moyen de commande, dont l'émetteur est relié à la ligne de référence du circuit, et dont le collecteur est relié à la lampe.

Selon une autre caractéristique, le collecteur du second transistor est reliée à l'une des bornes de la lampe dont l'autre borne est reliée au pôle positif de la batterie dont le pôle négatif est relié à la ligne de référence.

La base du second transistor est reliée électriquement au collecteur du premier transistor.

Selon une autre caractéristique, les moyens de détection de la tension comprennent une diode et une résistance montés en série entre l'entrée du premier moyen de commande et l'une des bornes de l'appareil électrique.

Selon une autre caractéristique, les moyens de détection du courant comprennent une diode et une résistance montées en série entre l'entrée du premier moyen de commande et l'autre borne de l'appareil électrique et huit diodes comprenant quatre diodes montées dans un sens en parallèle avec quatre diodes montée en sens inverse, l'ensemble de ces diodes étant monté en série avec l'appareil de coupure électrique.

Selon une autre réalisation, les moyens de détection du courant comprennent un tore, une première résistance de calibration montée en parallèle avec le tore, un redresseur monté en parallèle avec la résistance précitée et une seconde résistance reliant l'une des entrées de la première résistance précitée au redresseur.

La présente invention a encore pour objet un appareil électrique tel un interrupteur électrique comportant les caractéristiques précédemment mentionnées prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue de face d'un interrupteur selon l'invention comprenant un dispositif d'éclairage électrique selon l'invention,
- La figure 2 est un schéma électrique fonctionnel d'un interrupteur selon la figure 1,
- La figure 3 est un schéma électrique illustrant une réalisation particulière de l'interrupteur précité,
- La figure 4 est un schéma électrique illustrant une réalisation particulière d'un interrupteur selon la figure 3,
- La figure 5 illustre la partie extractible de l'interrupteur de la figure 4, et
- La figure 6 est un schéma électrique illustrant une autre réalisation d'un interrupteur selon l'invention.

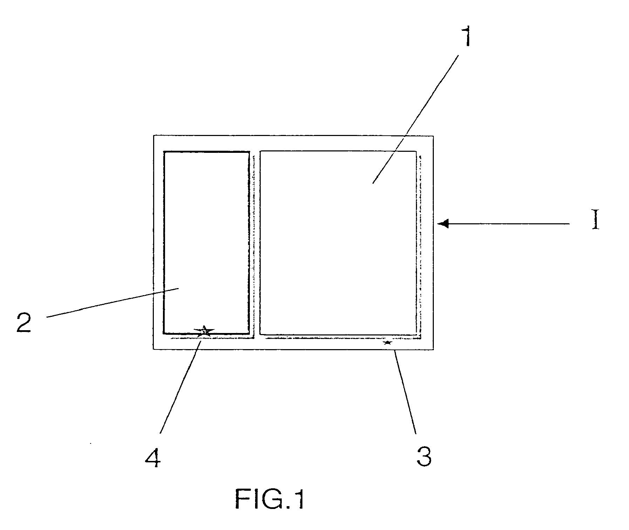

Sur la figure 1, est représenté un interrupteur électrique I de commande d'éclairage équipé d'un dispositif d'éclairage de secours selon l'invention.

Cet interrupteur 1 comporte une partie fixe 1 comportant un dispositif d'actionnement de l'interrupteur et une partie extractible 2. Cet interrupteur comporte deux lampes 3,4, de préférence des leds, dont l'une 3 a pour fonction de localiser ledit interrupteur dans l'obscurité tandis que l'autre 4 a une fonction d'éclairage de secours destinée à être activée lorsque le secteur est absent et à permettre de se déplacer dans le lieu d'habitation ou de poursuivre une activité domestique minimale.

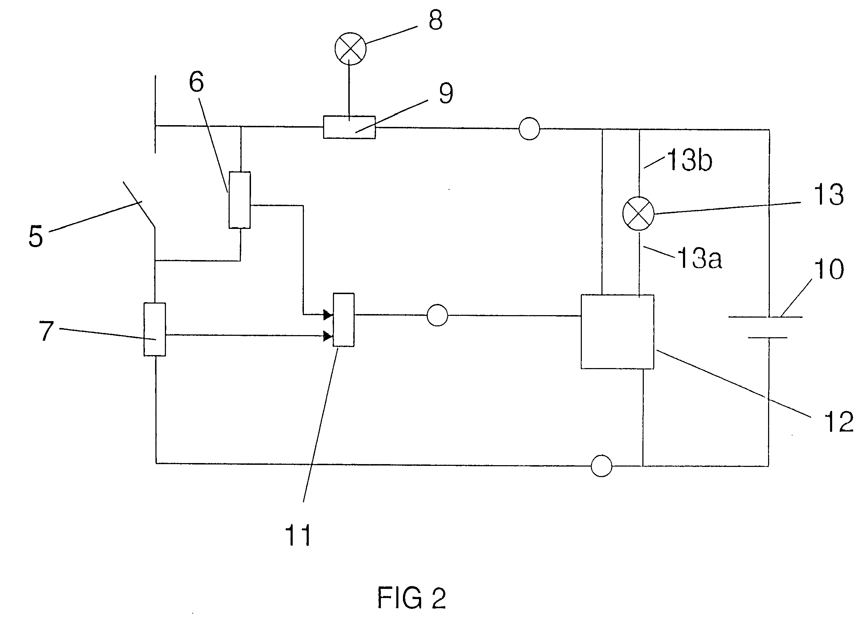

Sur la figure 2, le schéma électrique fonctionnel de l'interrupteur selon l'invention comporte à l'intérieur de la partie fixe 1, un interrupteur 5, des moyens 6 de détection de la présence de tension reliés en parallèle avec ledit interrupteur 5, des moyens 7 de détection de la présence d'un courant aux bornes de l'interrupteur 5 reliés en série avec ledit interrupteur 5, un voyant 8 indicateur de la présence de tension aux bornes de l'interrupteur 5, un circuit de charge ou d'alimentation 9 d'une batterie 10, ladite batterie 10 étant située à l'intérieur de la partie extractible, des premiers moyens de commande 11 reliés d'une part à la sortie des moyens de détection 6 de la tension et d'autre part, à la sortie des moyens de détection du courant 7, lesdits moyens de commande 11 étant destinés à commander des seconds moyens de commande 12 prévus dans la partie extractible 2. Cette partie extractible 2 comporte un lampe 13 ou led commandée par les seconds moyens de commande précités 12, ces seconds moyens de commande étant eux-mêmes reliés aux premiers moyens de commande 11, et une batterie 10 montée en parallèle avec la lampe 13 et les seconds moyens de commande 12.
Ces seconds moyens de commande 12 commandent l'éclairage ou l'extinction de la lampe 13 lorsque la seconde partie est extraite. Lorsque la partie extractible n'est pas extraite, ces seconds moyens de commande 12 sont reliés électriquement aux premiers moyens de commande 11 pour commander l'éclairage ou l'extinction de la lampe 13.
En fonctionnement, lorsque l'interrupteur est fermé, en présence d'un courant de secteur, le voyant de présence de tension 8 s'éteint. Lorsque les moyens de détection de la présence d'une tension 6 détectent une tension aux bornes de l'interrupteur 5 ou bien que les moyens de détection de courant 7 détectent un courant à travers l'interrupteur 5, les premiers moyens de commande 11 et les seconds moyens de commande 12 maintiennent l'extinction de la lampe 13. Lorsqu'une tension est détectée aux bornes de l'interrupteur 5, la batterie 10 se charge.

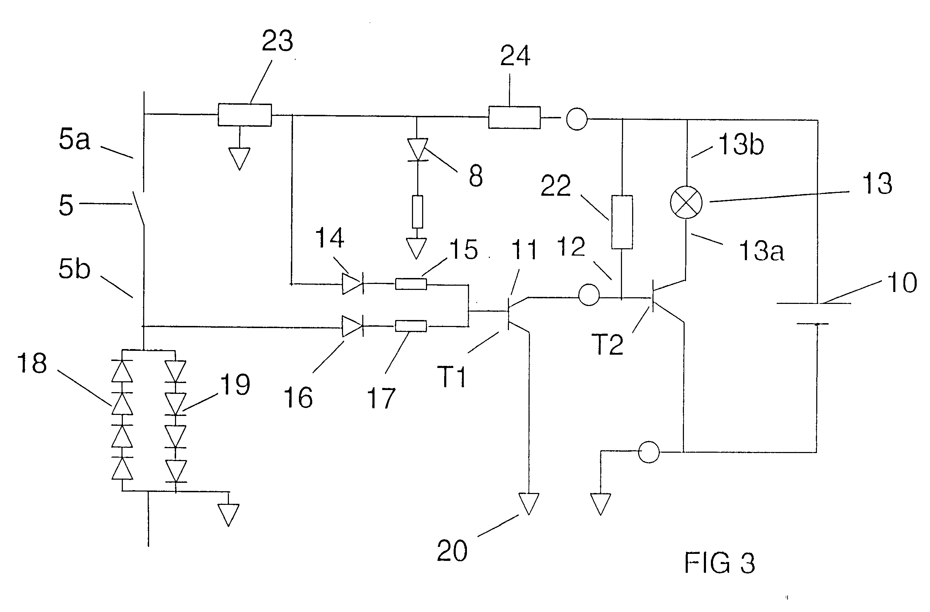

Dans le cas de l'absence du secteur, aucun courant ne traversant l'interrupteur 5 et aucune tension n'étant présente aux bornes de l'interrupteur 5, le voyant 8 s'éteint et les premiers moyens 11 commandent les seconds moyens de commande 12 pour allumer la lampe 13, de manière à éclairer le lieu d'habitation. Dans le cas ou la partie extractible 2 est extraite, ce sont les seconds moyens de commande 12 qui commandent l'allumage de la lampe 13.
Ainsi, dans le cas ou l'interrupteur 5 est ouvert, et le secteur présent, le courant aux bornes de l'interrupteur 5 est nul et la tension aux bornes de l'interrupteur est de 220v. En conséquence, le voyant 8 est allumé et la lampe 13 éteinte.
Dans le cas ou l'interrupteur 5 est ouvert et le secteur est absent, le courant aux bornes de l'interrupteur 5 est nul ainsi que la tension. Ainsi, le voyant 8 est éteint et la lampe 13 allumée. L'utilisateur peut donc débrancher la partie extractible afin de s'en servir comme d'une lampe de poche, la lampe restant alors allumée grâce à la présence de la batterie.
Dans le cas ou l'interrupteur 5 est fermé et le secteur présent, le courant aux bornes de l'interrupteur 5 circule et la tension est nulle aux bornes de l'interrupteur. Ainsi le voyant 8 est éteint et la lampe 13 éteinte.
Dans le cas ou l'interrupteur 5 est fermé et le secteur est absent , le courant aux bornes de l'interrupteur est nul ainsi que la tension. Ainsi, le voyant 8 est éteint et la lampe 13 allumée.
Selon un mode particulier de réalisation de l'invention illustré sur la figure 3, les moyens de détection de la tension 6 de la figure 2 comprennent une diode 14 et une résistance 15 montés en série entre l'entrée du premier moyen de commande 11 et l'une 5a des bornes de l'appareil électrique 5. Les moyens de détection du courant 7 de la figure 2 comprennent une diode 16 et une résistance 17 montées en série entre l'entrée du premier moyen de commande 11 et l'autre 5b des bornes de l'interrupteur 5, et quatre diodes 18 en série montées en parallèle avec quatre diodes 19 en série montées en sens inverse, l'ensemble de ces diodes étant monté en série avec l'appareil de coupure électrique 5.

Le premier moyen de commande 11 comporte un transistor T1 relié en amont par sa base, entre les deux résistances précitées 15,17, ledit transistor T1 étant relié par son émetteur à la ligne de référence 20 et par son collecteur à l'entrée ou la base d'un second transistor T2, lequel transistor est relié en sortie à la lampe 13.

Les seconds moyens de commande 12 comportent un second transistor T2 dont la base est reliée électriquement au premier moyen de commande, dont l'émetteur est relié à la ligne de référence 20 du circuit et dont le collecteur est relié à la lampe 13.
Le collecteur du second transistor T2 est reliée à la borne 13a de la lampe 13 dont l'autre borne 13b est reliée au pôle positif de la batterie 10 dont le pôle négatif est relié à la ligne de référence 20.
La base du second transistor T2 est reliée électriquement au collecteur du premier transistor T1.

En fonctionnement, si les moyens de détection détectent une tension ou un courant aux bornes de l'interrupteur 5, le transistor T1 conduit et le transistor T2 est ouvert. En conséquence, la lampe 13 ne s'allume pas.
Si aucune tension et aucun courant n'est détecté aux bornes de l'interrupteur 5, le transistor T1 n'est pas commandé et étant bloqué, il libère la commande du second transistor T2 qui se trouve polarisé par sa résistance 22 et la lampe 13 s'allume.
Si la partie extractible est extraite, le transistor T1 est polarisé par sa résistance 22 et la lampe 13 s'éclaire.

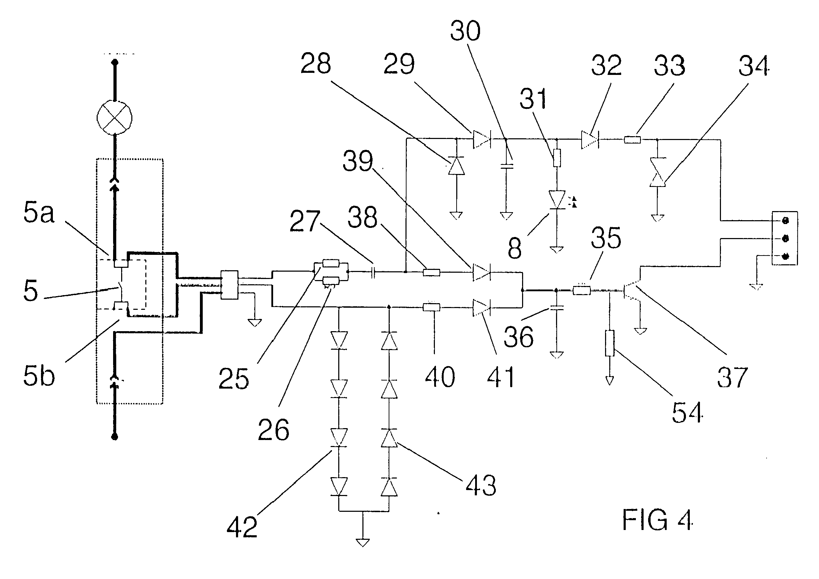

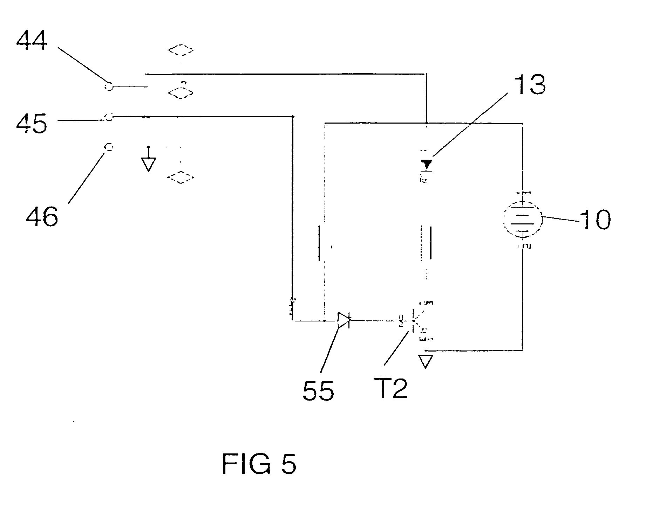

Sur la figure 4, une autre réalisation particulière d'un interrupteur selon l'invention est illustrée. Selon cette réalisation, les moyens de charge de la batterie comprennent un circuit de limitation du courant comportant deux résistances 25,26 montées en parallèle entre elles, le tout monté en série avec un condensateur 27, un circuit redresseur composé de deux diodes 28,29 montées en sens inverse et un filtre composé d'un condensateur 30, une résistance 31, une diode verte constituant le voyant lumineux 8, un limiteur de tension et de courant dans la batterie 10 illustrée sur la figure 3 comportant une diode 32, une résistance 33 et une diode zéner 34. Le premier circuit de commande 11 comprend un condensateur chimique 36, une résistance 35, une résistance 54 et un transistor 37, ledit circuit de commande ayant en entrée les moyens de détection de la tension et les moyens de détection du courant. Ces moyens de détection de la tension comprennent une résistance 38 et une diode 39 montées en série et les moyens de détection du courant comprennent également une résistance 40 et une diode 41 ainsi que quatre diodes 42 montées en série dans un sens montées en parallèle avec quatre diodes 43 montées en série dans l'autre sens, l'ensemble étant monté entre les bornes 5a,5b de l'interrupteur 5 et l'entrée du premier circuit de commande 11. Sur la figure 5, est représenté le circuit extractible présentant trois entrées à savoir l'entrée de charge de la batterie 44, l'entrée de commande 45 et la liaison à la ligne de référence 46. La partie extractible comprend principalement la lampe 13, la batterie 10, le transistor T2 et une diode 55 placée entre l'entrée du transistor T2 et l'entrée de commande 45.
Le fonctionnement de l'interrupteur selon cette réalisation est le même que celui de l'interrupteur selon la réalisation précédemment décrite et ne sera donc pas décrit de nouveau.

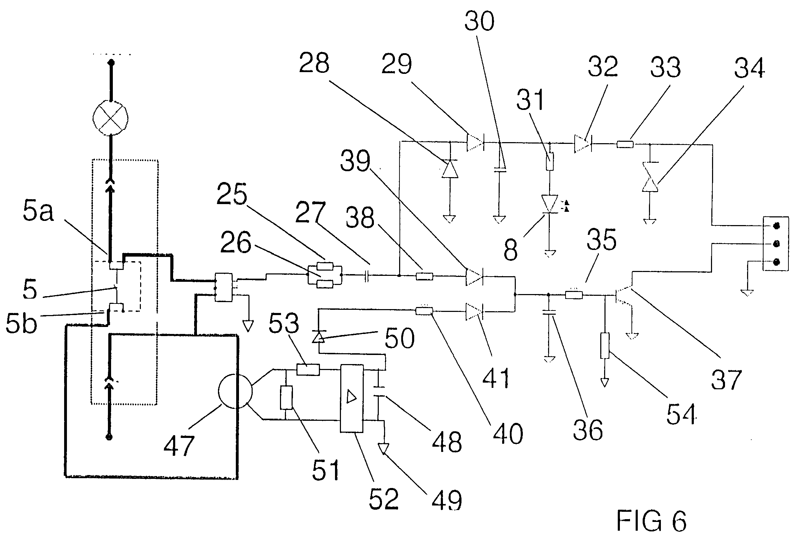

Selon la réalisation illustrée sur la figure 6, le circuit électrique comporte une partie réalisant la détection du courant comportant un tore 47, une résistance 51 montée en parallèle avec le tore 47, un redresseur 52 monté en parallèle avec la résistance 51, et une résistance 53 montée entre la résistance 51 et le redresseur 52, un condensateur 48 filtrant la sortie du redresseur, la sortie négative du redresseur étant reliée à la ligne de référence 49, la sortie positive passant par une diode 50 et étant reliée électriquement à la résistance 40 de la figure 4.
Le fonctionnement de l'interrupteur selon cette réalisation est le même que celui des réalisations précédemment décrites, le tore réalisant la détection du courant.
Dans toutes ces réalisations, le dispositif indique la présence de la tension et la recharge de la batterie par un voyant par exemple une led de faible luminosité. Elle devra commuter en mode secours en cas de manque de tension du secteur. La led de faible luminosité s'éteindra et le dispositif commutera simultanément sur l'éclairage d'une led de forte luminosité afin d'assurer un éclairage de secours.
L'extraction du dispositif de son socle de recharge sera considéré comme une perte de secteur et provoquera automatiquement le passage en mode secours.

On a donc réalisé grâce à l'invention un dispositif d'éclairage de secours permettant de regrouper dans un même volume différentes fonctions à savoir la fonction coupure électrique, la fonction veilleuse, la fonction éclairage de secours, le tout en utilisant seulement une phase électrique.

Bien entendu, l'invention n'est pas limitée aux modes de réalisation décrits et illustrés qui n'ont été donnés qu'à titre d'exemple.
Au contraire, l'invention comprend tous les équivalents techniques des moyens décrits ainsi que leurs combinaisons si celles-ci sont réalisées suivant son esprit.

## Revendications

1. Dispositif d'éclairage de secours comprenant une lampe mise en service lorsque le secteur est absent pour apporter un éclairage minimal, **caractérisé en ce qu'**il est associé à un appareil de coupure électrique et comporte des moyens de détection de la tension (6) aux bornes de l'appareil de coupure (5), des moyens de détection du courant (7) circulant dans ledit appareil (5), des moyens de commande dits premiers (11) reliés électriquement à la sortie des moyens de détection de la tension (6) et à la sortie des moyens de détection du courant précités (7) et commandant l'extinction de la lampe (13) lors de la détection soit d'une tension soit d'un courant aux bornes de l'appareil de coupure (5) et commandant l'allumage de la lampe (13) dans le cas où aucun courant et aucune tension ne sont détectés.

2. Dispositif d'éclairage de secours selon la revendication 1, **caractérisé en ce qu'**il comporte une partie fixe (1) et une partie extractible (2), ladite partie fixe (1) comportant les moyens de détection du courant précités (7), les moyens de détection de la tension précités (6), les premiers moyens de commande précités (11) et la partie extractible (2) comporte la lampe précitée (13), une batterie (10) et des moyens de commande (12) dits seconds de la lampe (13) en position extraite de la partie extractible (2).

3. Dispositif d'éclairage de secours selon la revendication 1 ou 2, **caractérisé en ce qu'**il comporte des moyens de charge (9) de la batterie (10), ladite batterie permettant l'allumage de la lampe (13) en l'absence du secteur.

4. Dispositif selon l'une quelconque des revendications 1 à 3, **caractérisé en ce qu'**il comporte un voyant électrique (8) destiné à indiquer la présence d'une tension aux bornes de l'appareil de coupure électrique (5).

5. Dispositif d'éclairage de secours selon l'une quelconque des revendications 1 à 4, **caractérisé en ce que** les premiers moyens de commande (11) comportent un transistor T1, dit premier, dont la base est reliée à la sortie des moyens de détection de la tension (6) et à la sortie des moyens de détection du courant (7), dont l'émetteur est relié électriquement à la ligne de référence (20) du circuit et dont le collecteur est relié électriquement aux moyens de commande dits seconds précités (12).

6. Dispositif d'éclairage de secours selon l'une quelconque des revendications 1 à 5, **caractérisé en ce que** les seconds moyens de commande (12) comportent un second transistor T2 dont la base est reliée électriquement aux premiers moyens de commande (11), dont l'émetteur est relié à la ligne de référence (20) du circuit, et dont le collecteur est relié à la lampe (13).

7. Dispositif selon la revendication 6, **caractérisé en ce que** le collecteur du second transistor T2 est reliée à l'une (13a) des bornes (13a,13b) de la lampe (13) dont l'autre borne (13b) est reliée au pôle positif de la batterie (10) dont le pôle négatif est relié à la ligne de référence (20).

8. Dispositif selon la revendication 6 ou 7, **caractérisé en ce que** la base du second transistor T2 est reliée électriquement au collecteur du premier transistor T1.

9. Dispositif selon l'une quelconque des revendications précédentes, **caractérisé en ce que** les moyens de détection de la tension (6) comprennent une diode (14) et une résistance (15) montés en série entre l'entrée du premier moyen de commande (11) et l'une (5a) des bornes de l'appareil électrique (5).

10. Dispositif selon la revendication 9, **caractérisé en ce que** les moyens de détection du courant (7) comprennent une diode (16) et une résistance (17) montées en série entre l'entrée du premier moyen de commande (11) et l'autre (5b) des bornes (5a,5b) de l'appareil, et quatre diodes (18) en série, en parallèle et en sens inverse avec quatre autres diodes (19) en série, l'ensemble de ces diodes étant monté en série avec l'appareil de coupure électrique (5).

11. Dispositif selon l'une quelconque des revendications 1 à 9, **caractérisé en ce que** les moyens de détection du courant (7) comprennent un tore (47), une première résistance de calibration (51) montée en parallèle avec le tore (47), un redresseur (52) monté en parallèle avec la résistance précitée (51) et une seconde résistance (53) reliant l'une des entrées de la première résistance précitée (51) au redresseur (52).

12. Interrupteur électrique comportant un dispositif selon l'une quelconque des revendications précédentes.
